# EUROPEAN PATENT APPLICATION

(11) **EP 4 851 901 A1**
(43) Date of publication of application: **09.12.2026**
(21) Application number: 25181258.2
(22) Date of filing: 06.06.2025
(51) Int. Cl.: G06Q 20/32, G06Q 20/38, H04L 9/08, H04L 9/32, H04L 9/40, G06Q 20/34

(54) **TRUSTED SERVICE MANAGER**

(71) Applicant: Giesecke+Devrient advance52 GmbH, 81677 München (DE)
(72) Inventor: Martini, Ullrich, 81677 München (DE); Hupel, Lars, 81677 München (DE); Bohn, Markus, 81677 München (DE)
(74) Representative: Giesecke+Devrient IP

(57) **Abstract**

Trusted service manager (1), comprising:
- a remote secure element interface (12) for updating a secure element;
- a management unit interface (13) to multiple secure element management units (3), each secure element management unit (3) arranged to update secure elements (2) assigned to the secure element management unit (3); and
- a key storage unit for storing secure element keys (21, 22).

The key storage unit is a hardware security module (11). The hardware security module (11) of the trusted service manager (1) stores and uses an initial secure element update key (21i), wherein the initial secure element update key (21i) being initially stored in the secure element (2) and provided by the secure element management unit (3) assigned to the secure element (2); and the hardware security module (11) of the trusted service manager (1) stores and uses an operative secure element update key (21o) of the secure element (2), wherein the operative secure element key (21o) is used for transferring a system key (22) of the secure element (2) after the trusted service manager (1) has replaced in the secure element (2) the initial secure element update key (21i) by the operative secure element update key (21o).

## Description

The invention relates to a trusted service manager provided for updating secure elements for a target system.

Trusted service managers are known to update secure elements for a target system. The secure elements to be updated may be separate hardware secure elements, like smart cards, or secure elements of a device, like a SIM card, embedded secure element, TPM or NFC unit of a IoT device or a user device. Typically, a trusted service manager gets a request to update a secure element and e.g. installs the applet in the secure element. The document TR-03165 "Trusted service management system" is an existing technical guideline for trusted service managers. Furthermore, Global Platform specifications exist which describe updating of secure elements based on separate storage areas each including a secure update key.

In the field of digital money systems, including digital currency systems, account-based systems and token-based systems form well known different approaches. Many of the recent account-based systems use blockchains, wherein ownership of the digital money is transferred within the blockchain, e.g. by changing the assignment from one account to another account. However, these systems typically do not support offline transactions. Isolated existing proposals significantly increase the storage requirements for the transaction unit. In token-based digital money systems typically a monetary value token is transferred between secure transaction units. For example EP 3 671 514 B1, WO 2020/212331 A1, WO 2021/170646 A1, WO 2023/011758 A1 and WO 2023/011761 A1 disclose different aspects of such systems. Monetary value tokens may be used in transactions offline and online. However, for security reasons, a secure element should be used.

WO 2014/079563 A1, WO 2014/079564 A1 and EP 2 885 907 B1 show examples of trusted service managers.

According to an object of the invention a trusted service manager shall be provided which improves security, preferably with remaining or increased flexibility and/or with remaining or decreased management effort, particularly for secure elements used in offline scenarios and particularly in view of multiple system application issuers and/or various device types.

The above-identified objectives are solved with the features of the independent claims. Further advantageous embodiments are described in the dependent claims.

According to an aspect of the present invention, there is provided a trusted service manager, comprising:
- a remote secure element interface for updating a secure element;
- a management unit interface to multiple secure element management units, each secure element management unit arranged to update secure elements assigned to the secure element management unit; and
- a key storage unit for storing secure element keys.

The key storage unit is a hardware security module of the trusted service manager. The hardware security module stores and uses an initial secure element update key, wherein the initial secure element update key being initially stored in the secure element and provided by the secure element management unit assigned to the secure element.

The hardware security module of the trusted service manager further stores and uses an operative secure element update key of the secure element, wherein the operative secure element key is used for transferring a system key of the secure element after the trusted service manager has replaced in the secure element the initial secure element update key with the operative secure element update key.

The present approach ensures that no entity outside the trusted service manager has access to the secure element update key and thus can change data on the secure element. Additionally however it is further avoided that other trusted service manager components, besides the hardware security module, have access to the operative secure element update key. The operative secure element update key is neither used nor stored outside the hardware security module (and the secure element). This security improvement is relevant for the trusted service manager, since as a consequence of the secure handling of the secure element update key, the remaining units of the trusted service manager can be implemented with reduced restraints. In particular the secure element interface requires the trusted service manager to access different types of secure elements and to access/use even more technically different intermediary devices (in the communication with the secure element).

The system key could be a system authentication key of the secure element in a target system. The system authentication key may particularly allow authentication of the secure element to other secure elements of the target system.

In a first variant the system key is generated in the hardware security module and transferred from the hardware security module of the trusted service manager to the secure element. The system key may be a private system key of a system key pair of the secure element comprising the private system key and a public system key. This approach is particularly advantageous, if the hardware security module also generates a certificate for the public key. Alternatively, the system key may be a symmetric key.

In a second variant the system key is generated in the secure element and transferred from the secure element to the hardware security module of the trusted service manager. The system key may be a public system key of a system key pair comprising a private system key and the public system key. This approach is advantageous since the private key of the secure element does not have to be transferred. Alternatively, the system key may be a symmetric key.

The hardware security module preferably is configured to use the operative secure element update key for an encrypted transfer of the system key. The encrypted transfer of the system key may be referred to as an end-to-end encrypted transfer from the hardware security module to the secure element. Either the system key is encrypted in the hardware security module for the transfer to the secure element or the system key is decrypted in the hardware security module after the transfer from the secure element. For the encryption the operative secure element update key or a session encryption key derived/generated from the operative secure element update key may be used.

In preferred variants, the hardware security module is configured to create a certificate for a public system key of the secure element (or for the identifier of the secure element). A system key pair of the secure element comprises (or consists of) the public system key and a private system key, the system key being the private system key or the public system key. The certificate may be send from the trusted service manager to the secure element and stored in the secure element. In less preferred variants the certificate is created by a separate certificate issuing unit and only optionally updated in the secure element by the trusted service manager.

Further certificates may be updated to the secure element, preferably also by the trusted service manager. The further certificates and the certificate of the secure element forming a certificate chain for the secure element. The present approach provides an additional advantage in that a certificate of a secure element management unit would not be required in the certificate chain.

The hardware security module may also be configured to use the initial secure element update key for an encrypted transfer of the operative system update key. The encrypted transfer of the operative system update key may be referred to as an end-to-end encrypted transfer between the hardware security module and the secure element (from/to). Either the operative system update key is encrypted in the hardware security module for the transfer to the secure element or the operative system update key is decrypted in the hardware security module after the transfer from the secure element. For the encryption the initial secure element update key or a session encryption key derived/generated based on the initial secure element update key.

A transfer of the initial secure element update key between (from/to) the trusted service manager and the secure element management unit may occur via the management unit interface. Preferably, the initial secure element update key is send to the secure element management unit of the secure element or received from the secure element management unit of the secure element.

Alternatively to a transfer of the key, the initial secure element update key could be derived for the secure element from a master update key. For example, the hardware security module and the secure element management unit may store the master update key and derive the initial secure element update key, particularly based on a secure-element-specific derivation input and the master update key. Preferably data read out from the secure element are used as a derivation input. For example, a secure element identifier, a system applet identifier, a chip identifier or even a (transferred) random number could be used as a derivation input.

In the preferred variants, the system key is an asymmetric key and the initial secure element update key and/or the operative secure element update key are symmetric keys.

The system key and/or the operative secure element update key are secure-element-specific keys. The initial secure element update key may also be secure-element-specific key but could also be a generic initial key, e.g. a combination-specific initial secure element update key (generic for secure elements of the combination of a given trusted service manager and a given secure element management unit).

In the most advantageous embodiment, the target system for which the secure element is updated is
- a monetary value token system, particularly a CBDC token system, or
- a digital identity system, particularly a national or regional digital identity system.

In other embodiments the system is a health insurance system or driving license system. The system key is also referred to as a target system key, e.g. token system key or identity system key, preferably token system authentication key or identity system identification key.

In a monetary value token system the system key preferably is an (asymmetric) authentication key for the monetary value token application. In transactions of the monetary value token system a monetary value token is exchanged and/or the authentication key is used for authenticating the secure element to the transaction partner. Particularly a token system certificate may be stored with the token system authentication key.

A monetary value token typically comprises one or more of the following data elements: a value data element, a token individual secret, preferably a secret key of a key pair, a token reference, preferably derived from the token secret and/or a public key of a (the) key pair, and possibly a token issuer information. Exchanging a monetary value token in an (online or offline) transaction constitutes a payment transaction (since the exchange transfers the monetary value of the monetary value token).

The monetary value token (transaction) system preferably comprises one or more token issuers and/or a token (reference) register and or one or more financial service provides. A token reference register includes token references (but not the tokens). For example WO 2021/170646 A1, WO 2023/011758 A1, WO 2023/011761 A1 and WO 2024/027869 A1 show details of possible monetary value tokens and/or monetary value token transaction systems. The derivation of a token may for example be implemented based on the splitting, merging or switching of tokens described herein.

The trusted service manager particularly further comprises a data storage unit (and a processor). The data storage unit stores system applet code executable in the secure element and/or system configuration data, particularly including a system limit to be applied in the secure element and/or a transfer encryption key for the transfer of non-secret data to the secure element, the non-secret data particularly including the system applet code and/or the system configuration data.

In variants the trusted service manager is configured to request - via the management unit interface - the secure element management unit to provide a separate (storage) area on the secure element for the trusted service manager. The separate storage area may be a security domain and/or an application area. In particular the trusted service manager updates the separate area thereby enabling the use of the secure element in a target system, e.g. as mentioned above.

In an aspect of the present solution a system is provided, comprising one or more trusted service manager as described above; multiple secure element management units; and multiple secure elements assigned to one of the secure element management units. The secure elements preferably including an operative secure element update key, which is also stored in the hardware security module of one of the one or more trusted service managers. The secure elements optionally being separate hardware secure elements, like smart card, RFID token or USB token or secure wearable, and/or secure elements, such as UICC, eUICC, iUICC, NFC unit or TPM, of a device, such as a user device (smart phone, computer, wearable, like watch, or ...) or IoT device.

One or more of the following steps may be performed in the trusted service manager, in particular of the system:
- receive an updating request to update the secure element for a target system, preferably from a device of the secure element;
- identify the secure element management unit of the secure element from the multiple secure element management units, preferably based on the received updating request;
- send a secure element preparation request to the secure element management unit of the secure element;
- transfer the initial secure element update key to/from the secure element management unit of the secure element, the transfer is preferably encrypted or generate the initial secure element update key (preferably by derivation based on a master update key);
- encrypted transfer of the operative secure element update key to/from the secure element, particularly in an end-to-end encryption between the secure element and the hardware security module, wherein the initial secure element update key is used (directly or indirectly) for the encrypted transfer and wherein the operative secure element update key replaces the initial secure element update key in the secure element;
- request creation of a system applet area in the secure element;
- transfer of the system applet and optionally a device application to the secure element;
- generate a system key;
- encrypted transfer of the system key to/from the secure element, particularly in an end-to-end encryption between the secure element and the hardware security module, wherein the operative secure element update key is used (directly or indirectly) for the encrypted transfer;
- generating a certificate in the hardware security module, preferably for a system public key of the secure element (2), and transfer the certificate to the secure element (2).

One or more of the following steps may be performed in the secure element management unit: prepare the secure element for the subsequent update by the trusted service manager, in particular by performing one or more of the following steps:
- request creation of a separate trusted service manager area in the secure element, the separate trusted service manager area may be created in an area of the secure element management unit; and/or
- transfer the initial secure element update key to the secure element; and/or
- transfer a system library (and/or a system application) for a device including the secure element.

One or more of the following steps may be performed in the secure element - when being updated for a target system:
- create a separate trusted service manager area, preferably within a management unit area of the assigned secure element management unit;
- store the initial secure element update key, preferably received from the secure element management unit; transfer (send or receive) the operative secure element update key;
- replace the initial secure element update key by the operative secure element update key in the secure element;
- create a system applet area, preferably in the trusted service manager area;
- receive from the trusted service manager and store in the secure element a system certificate for the target system and/or a system applet for the target system and/or configuration data for the target system;
- decrypt received data (e.g. system applet, configuration data and/or certificate) using a secondary update key;
- store a system applet, configuration data and/or a certificate for the public system key of the secure element in the system applet area;
- generate the (secure-element-specific) system key;
- encrypted transfer (send/receive) of the system key for the target system using the operative secure element update key;
- store the system key.

It should be noted that neither all of the above steps are required nor are the steps necessarily performed in the order given. It may also be noted that end-to-end encryption in the present context does not refer to a specific algorithm and/or protocol, but rather defines the achievement of excluding readability of the encrypted information for third parties or intermediaries.

In the following, the invention or further embodiments and advantages of the invention are explained in more detail based on drawings, wherein the drawings describe only some of the possible embodiments of the invention. At least elements drawn with dashed lines are considered as optional elements.

The drawings are not to be regarded as true to scale, and individual elements of the drawings may be shown in exaggeratedly large or exaggeratedly simplified form.

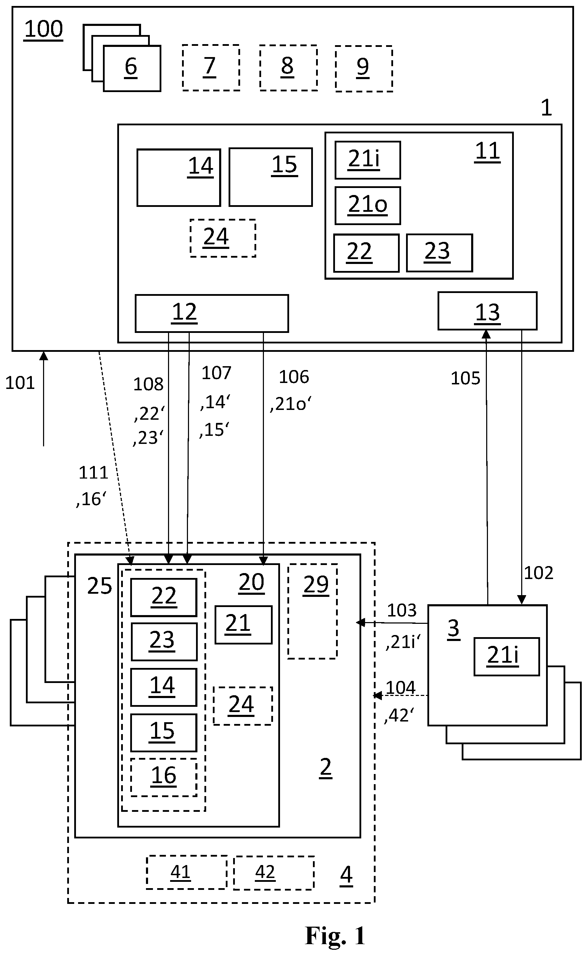

Fig. 1 shows a trusted service manager arranged for updating secure elements for their use in a target system.

Fig. 1 illustrates a trusted service manager 1, secure elements 2, secure element management units 3 and a target system 100. The secure elements 2 can be arranged or included in an optional device 4, e.g. a SIM card or embedded UICC arranged in a mobile phone or a NFC unit or iSIM integrated in an IoT device.

The target system 100 may be a monetary value token system or an identity system, however the further description focusses on the example of a monetary value token system.

Secure elements 6 (or transaction units) of the target system 100 will exist in the target system 100. These secure elements 6 already include a system application and/or a system key for the target system. For example, they could include a monetary value token application for storing and exchanging monetary value tokens in the target system and/or an authentication key for authentication towards other secure elements/transaction units of the monetary value token system. In another example the secure elements 6 include a digital identity application and/or an authentication key for identification in a digital identity system.

Secure elements 2 may have to be (remotely) updated for the target system 100. After the update they can be used in the target system 100. Hence, the secure elements 2 will initially comprise none of shown items 14 to 25, in particular neither a system application 25 for the target system 100 nor a system key 22 for the target system 100.

The trusted service manager 1 comprises a hardware security module 11, a remote secure element interface 12 and a management unit interface 13. It will further comprise a processor and a data storage unit (not shown), wherein the interfaces 12, 13 may us the same communication unit (not shown) of the trusted service manager 1.

The remote secure element interface 12 is used for updating a secure element 2 for the target system 100. The management unit interface 13 is an interface to the multiple secure element management units 3. Each secure element management unit 3 is arranged to update secure elements 2 assigned to the secure element management unit 3. The hardware security module 11 is the key storage unit of the trusted service manager 1.

The hardware security module 11 of the trusted service manager 1 stores and uses an initial secure element update key 21i, wherein the initial secure element update key 21i is provided 103 to the secure element 2 by the secure element management unit 3 assigned to the secure element and stored in the secure element 2 (in a secure element update key field 21).

The hardware security module 11 of the trusted service manager 1 further stores and uses an operative secure element update key 21o of the secure element 2. The trusted service manager 1 replaces (106) in the secure element 2 the initial secure element update key 21i by the operative secure element update key 21o. Thereafter the operative secure element key 21o is used for transferring (108 - send or receive) a system key 22 of the secure element 2 (to or from the secure element 2).

Accordingly, it can be achieved that the operative secure element update key 21o and the system key 22 are stored and used in the secure element 2 and the hardware security module 11 only.

Fig. 1 also shows steps 101-111 of an updating process and at least partly the data elements transferred in those steps, e.g. the initial secure element update key 21i in step 103.

The trusted service manager 1 may receive an update request 101 for a secure element 2, e.g. from the device 4 of the secure element, from a system service provide 7 of the target system 100 or even from the secure element 2. The update request 101 requests the trusted service manager 1 to update the secure element 2 for the target system 100. It thus indicates the secure element 2 and/or its device 4, and optionally identifies the target system 100 and/ or the secure element management unit 3 assigned to the secure element 2.

The trusted service manager 1 sends a preparation request 102 to the secure element management unit 3 of the secure element 2. If the secure element management unit 3 is not indicated in a request 101, the trusted service manager 1 may determine the secure element management unit 3 of the multiple secure element management units 3. The secure element management unit 3 assigned to the secure element 2 may be determined based on a secure element identifier and/or a device identifier.

The secure element management unit 3 sends 103 the initial secure element update key 21i to the secure element 2. Furthermore, in the secure element preparation 103 typically a separate system storage area 20 or trusted service manager storage area 20, e.g. a directory file (a file for data elements and/or code) or a security domain, is created in the secure element 2. The initial secure element update key 21i is stored in the (target) system storage area 20 of the secure element. At least a system key 22 and optionally further keys or secret data of the (target) system storage area 20 can be updated using the secure element update key 21 of the secure element. In addition - at least once, the initial secure element update key 21i can be used to update/replace the currently stored secure element update key 21.

Optionally, the secure element 2 comprises a separate management unit area 29 of the secure element management unit 3 assigned to the secure element 2, which may e.g. include keys for verifying the preparation request and/or the authenticating the secure element management unit 3.

In an optional further device preparation step 104, the secure element management unit 3 may transfer device software 41, 42 for the target system to the device, e.g. a target system device library 42 or a target system device application 41. In the preferred variants however, the target system device software 41, 42 is provided to the device 4 by the trusted service manager 1 or by a central software repository (such as an app store).

The secure element management unit 3 confirms 105 the requested preparation of the secure element 2 to the trusted service manager 1.

In steps 102, 105 the initial secure element update key 21i may be transferred between the trusted service manager 1 and the secure element management unit 3, e.g. send 102 or received 105 by the trusted service manager 1. Alternatively, the initial secure element update key 21i may either be pre-determined or derivable from a pre-determined derivation key known to the trusted service manager 1 and the secure element management unit 3.

The update process 101-111 could be considered to include a secure element preparation phase 102-105 and a secure element update phase 106-108. Optional step 111 may or may not be performed as a part of the update process and/or be performed with or without involvement of the trusted service manager 1.

The trusted service manager 1 sends an update key replacement request 106 to the secure element 2, such that the initial secure element update key 21i is replaced by the operative secure element update key 21o. The secure element update key 21o may be generated in the hardware security module 11 and send in the replacement request 106 or may be generated in the secure element 2 and send in a reply to the replacement request 106. The transfer (send/receive secure element update key 21o) is an end-to-end encrypted transfer between the secure element 2 and the hardware security module 11.

An applet update request 107 send from the trusted service manager 1 to the secure element 2 may include a target system applet 14 and/or target system configuration data 15 and/or a request for creation of a system applet area 25 in the trusted service manager area 20. Thus the secure element 2 stores the target system applet 14 and/or the target system configuration data 15 and/or creates the system applet area 25, particularly in the in the trusted service manager area 20.

The system key 22 is transferred 108 in encrypted form to (or from) the secure element 2 from (or to) the hardware security module 11 in the trusted service manager 1. The operative secure element update key 21o is used for the encryption, either directly or indirectly by deriving a (session) encryption key based thereon.

The system key 22 could be a symmetric key generated in the hardware security module 11 (or the secure element 2). In the preferred variants, the system key 22 is an asymmetric key, e.g. a public system key or a secret system key of a system key pair comprising those keys. The hardware security module 11 may generate at least the private system key as the system key 22, encrypt the private system key and send the encrypted private key to the secure element 2. Alternatively, the secure element 2 may generate the system key pair, the public system key forming the system key 22, encrypt the public system key using the operative secure element update key 21o and send the encrypted public key to the trusted service manager 1.

As indicated in Fig. 1 the hardware security module 11 is further configured to create a certificate 23 for the secure element 2, particularly a certificate 23 for the public system key of the secure element. The certificate 23 can be transferred in step 108 or separately thereafter.

In addition further certificates and/or further public keys, preferably including a root public key, may be transmitted to the secure element 2. The further certificates may form a certificate chain for the certificate of the secure element 2/the system key 22.

A secondary update key 24 available in the normal storage area of the trusted service manager 1 may be used to encrypt the non-secret elements 14, 15 for their transfer in step 107.

Optionally, device software 41, 42 is transferred to the device 4 of the secure element 2.

Finally, in an optional step 111 further target system data can be stored into the secure element. For example, in the monetary value token system the secure element 2 would receive monetary value tokens 16, e.g. from a service provider unit 7 of the target system 100.

In the target system 100 one or multiple trusted service managers 1 may exist. The target system 100 further may optionally comprise system service providers 7, a system operator 8 and a system register 9.

In a monetary value token system the system operator unit 8 would be the token issuer unit of the monetary value token system and/or the system register would be a token (reference) register of the target system 100. Hence, the secure elements 2, 6 would authenticate each other in transaction using the system authentication key 22 and would store and exchange monetary value tokens optionally created by the token issuer and/or registered in the token (reference) register. In a digital identity system the system operator unit 8 could be the identity issuer of the identity system and/or the system register 9 could be an identity register of the target system 100.

### REFERENCE SIGNS

- 1: trusted service manager
- 2: secure element
- 3: secure element management unit
- 4: user device
- 6: secure elements
- 7: system service provider
- 8: system operator
- 9: system register
- 100: target system

- 11: hardware security module
- 12: remote secure element interface
- 13: management unit interface
- 14: system applet
- 15: configuration data
- 16: monetary value token

- 20: separate trusted service manager area
- 21, 21i, 21o: secure element update key
- 22: system key
- 23: system key certificate
- 24: secondary update key
- 25: system applet area
- 29: separate management unit area

- 41: system application
- 42: system library

- 101: updating request
- 102: preparation request
- 103: secure element preparation
- 104: device preparation
- 105: preparation confirmation
- 106: update key replacement request
- 107: applet update request
- 108: system key transfer
- 111: monetary value token transfer

## Claims

1. Trusted service manager (1), comprising:
- a remote secure element interface (12) for updating a secure element;
- a management unit interface (13) to multiple secure element management units (3), each secure element management unit (3) arranged to update secure elements (2) assigned to the secure element management unit (3); and
- a key storage unit for storing secure element keys (21, 22);
**characterized in that**
the key storage unit is a hardware security module (11);
the hardware security module (11) of the trusted service manager (1) stores and uses an initial secure element update key (21i), wherein the initial secure element update key (21i) being initially stored in the secure element (2) and provided by the secure element management unit (3) assigned to the secure element (2); and
the hardware security module (11) of the trusted service manager (1) stores and uses an operative secure element update key (21o) of the secure element (2), wherein the operative secure element key (21o) is used for transferring a system key (22) of the secure element (2) after the trusted service manager (1) has replaced in the secure element (2) the initial secure element update key (21i) with the operative secure element update key (21o).

2. The trusted service manager of claim 1, **characterized in that** the system key (22) is a system authentication key (22) of the secure element (2) in a target system (100).

3. The trusted service manager of one of claims 1 or 2, **characterized in that** the system key (22) is generated in the hardware security module (11) and transferred from the hardware security module (11) to the secure element (2), preferably the system key is a private system key of a system key pair of the secure element (2) comprising the private system key and a public system key.

4. The trusted service manager of one of claims 1 or 2, **characterized in that** the system key (22) is generated in the secure element (2) and transferred from the secure element (2) to the hardware security module (11), the system key preferably being a public system key of a system key pair comprising a private system key and the public system key.

5. The trusted service manager (1) of one of the preceding claims, **characterized in that** the hardware security module (11) is configured to use the operative secure element update key (21o) for an encrypted transfer of the system key (22), particularly
- by encrypting the system key (22) for the transfer to the secure element (2) or by decrypting the system key (22) after the transfer from the secure element (2); and/or
- by using directly the operative secure element update key (21o) or a session encryption key derived based thereon.

6. The trusted service manager (1) of one of the preceding claims, **characterized in that** the hardware security module (11) is configured to create a certificate for a public system key of the secure element (2), a public system key pair of the secure element (2) comprising the public system key and a private system key, the system key (22) being the private system key or the public system key.

7. The trusted service manager (1) of one of the preceding claims, **characterized in that** the hardware security module (11) is configured to use the initial secure element update key (21i) for an encrypted transfer of the operative system update key (21o), particularly
- by encrypting the operative system update key (21o) for the transfer to the secure element (2) or by decrypting the operative system update key (21o) after the transfer from the secure element (2); and/or
- by using directly the initial secure element update key (21i) or an encryption key derived based thereon.

8. The trusted service manager (1) of one of the preceding claims, **characterized in that** the trusted service manager (1) is configured for
- a generation of the initial secure element update key (21i) based on a master update key, preferably based on the master update key and a derivation input; or
- a transfer of the initial secure element update key (21i) via the management unit interface (13), preferably by sending the initial secure element update key (21i) to the secure element management unit (3) of the secure element (2) or by receiving the initial secure element update key (21i) from the secure element management unit (3) of the secure element (2).

9. The trusted service manager (1) of one of the preceding claims, **characterized in that** a target system (100) for which the secure element is updated is
- a monetary value token system, particularly a CBDC token system, or
- a digital identity system, particularly a national or regional digital identity system.

10. The trusted service manager (1) of one of the preceding claims, **characterized in that** the trusted service manager (1) comprises a data storage unit, storing
- system applet code executable in the secure element; and/or
- system configuration data, particularly including a system limit to be applied in the secure element; and/or
- a transfer encryption key (24) for the transfer of non-secret data to the secure element (2), the non-secret data particularly including the system applet code and/or the system configuration data.

11. The trusted service manager (1) of one of the preceding claims, **characterized in that** the trusted service manager (1) is configured to request - via the management unit interface (13) - the secure element management unit (3) to provide a separate area (20,25) on the secure element (2) for the trusted service manager (1), in particular the trusted service manager (1) updates the separate area (20,25) thereby enabling the use of the secure element (2) in a target system (100).

12. A system comprising
- one or more trusted service manager (1) according to one of the preceding claims;
- multiple secure element management units (3); and
- multiple secure elements (2) assigned to one of the secure element management units (3) and including an operative secure element update key stored in the hardware security module (11) of one of the one or more trusted service managers (1), the secure elements optionally being separate hardware secure elements (2) and/or secure elements (2) of a device (4).

13. The system of claim 12, wherein the trusted service manager (1) is configured to perform one or more of the following steps:
- receive an updating request (101) to update the secure element (2) for a target system (100);
- identify the secure element management unit (3) of the secure element (2) from the multiple secure element management units (3), preferably based on the updating request;
- send a secure element preparation request (102) to the secure element management unit (3) of the secure element (2);
- transfer (102, 105) the initial secure element update key (21i) to/from the secure element management unit (3) of the secure element (2);
- generate the initial secure element update key (21i) based on a master update key;
- encrypted transfer (106) of the operative secure element update key (21o) to/from the secure element (2), particularly in an end-to-end encryption between the secure element (2) and the hardware security module (11), wherein the initial secure element update key (21i) is used for the encrypted transfer and wherein the operative secure element update key (21o) replaces the initial secure element update key (21i);
- request creation of a system applet area (25) in the secure element (2);
- transfer (107) of the system applet (14, 15) and optionally a device application (41) to the secure element (2);
- encrypted transfer (108) of the system key (22) to/from the secure element (2),, particularly in an end-to-end encryption between the secure element (2) and the hardware security module (11), wherein the operative secure element update key (21o) is used for the encrypted transfer;
- generating a certificate (23) in the hardware security module, preferably for a system public key of the secure element (2), and transfer the certificate to the secure element (2).

14. The system of claim 12 or 13, wherein the secure element management unit (3) of the secure element (2) is configured to prepare the secure element (2) for the update by the trusted service manager (1), in particular performing one or more of the following steps:
- request creation of a separate trusted service manager area (20) in the secure element (2); and/or
- transfer (103) the initial secure element update key (21i) to the secure element (2); and/or
- transfer a system library (42) for a device (4) including the secure element (2).

15. The system of one of claims 12 to 14, wherein the secure element (2) updated for a target system (100) is configured to perform one or more of the following steps:
- create a separate trusted service manager area (20), preferably within a management unit area (29) of the assigned secure element management unit (3);
- store the initial secure element update key (21i);
- transfer the operative secure element update key (21o);
- replace the initial secure element update key (21i) by the operative secure element update key (21o);
- create a system applet area (25), preferably in the trusted service manager area (20);
- decrypt transferred data using a secondary update key (24);
- encrypted transfer of the system key (22) for the target system (100) using the operative secure element update key (21o);
- store and/or generate the system key (22);
- receive from the trusted service manager (1) and store in the secure element (2) a system certificate (23) for the target system (100) and/or a system applet (14) for the target system (100) and/or configuration data (15) for the target system (100).
